# EUROPÄISCHE PATENTSCHRIFT

(11) **EP 0 865 727 B1**
(45) Veröffentlichungstag und Bekanntmachung des Hinweises auf die Patenterteilung: **02.05.2002**
(21) Anmeldenummer: 98103857.3
(22) Anmeldetag: 05.03.1998
(51) Int. Cl.: A01K 5/00

(54) **Klinge für eine Mischschnecke an einem Futtermischwagen**
Cutterblade for a conveyor-mixer in a fodder-mixing trailer
Lame de coupe pour vis mélangeuse dans une remorque mélangeuse de fourage

(30) Priorität: 19.03.1997 DE 19711390
(43) Veröffentlichungstag der Anmeldung: 23.09.1998
(73) Patentinhaber: Frielinghaus GmbH, 58256 Ennepetal (DE)
(72) Erfinder: Braun, Wolfgang, 58256 Ennepetal (DE)
(74) Vertreter: Patentanwälte Rehberg + Hüppe

(56) Entgegenhaltungen:
- EP-A- 0 345 609
- EP-A- 0 385 353
- EP-A- 0 824 965
- WO-A-97/22239
- DE-A- 3 042 950

## Beschreibung

Die Erfindung betrifft eine Klinge für eine Mischschnecke an einem Futtermischwagen, mit einem flachen, weitgehend ebenen Grundkörper aus Stahl, der mindestens eine der Befestigung im Randbereich der Mischschnecke dienende Druchbrechung und mindestens eine Schneide aufweist. Solche Futtermischwagen weisen einen Aufnahmeraum für das zu mischende Futter auf, in welchem ein oder mehrere angetriebene Schnecken mit Achse und Wendel vorgesehen sind. Im Bereich des freien Randes der Mischschnecke bzw. der Wendel befinden sich in regelmäßigen Abständen Löcher. Jede Klinge besitzt mindestens eine Durchbrechung, so daß sie mit einer Befestigungsvorrichtung, in der Regel einer Schraube mit Mutter, so im Randbereich der Mischschnecke befestigbar ist, daß ihre Schneide bzw. eine ihrer Schneiden über den freien Randbereich der Mischschnecke nach außen vorsteht. Die für diesen Einsatzzweck bestimmten Klingen besitzen meist mehrere Schneiden, um die Klingen in unterschiedlicher Relativanordnung mehrfach benutzen und einsetzen zu können.

Eine Klinge der eingangs beschriebenen Art ist aus der EP 0 612 465 A1 bekannt.

Klingen für Mischschnecken an Futtermischwagen sind in verschiedener Gestalt bekannt. Es gibt Klingen mit rundem, dreieckigem, viereckigem, sechs- oder achteckigem Umriß. Die Schneide bzw. Schneiden können in sich noch einmal gezahnt oder gewellt ausgebildet sein. Die Durchbrechung zur Befestigung der Klinge an der Mischschnecke befindet sich meist im Zentrum der Klinge. Es gibt auch Ausführungsformen, bei denen im Grundkörper mehrere Durchbrechungen vorgesehen sind.

In solche Futtermischwagen werden Futterstoffe der verschiedensten Art, beispielsweise auch Strohballen, Silage und andere, auch unterschiedliche Futtermittel geworfen. Der Futtermischwagen hat die Aufgabe, diese Futterstoffe mit den Klingen zu zerschneiden, also zu zerkleinern und gleichzeitig zu mischen. Beim Antrieb der Schnecke bzw. Schnecken in dem Futtermischwagen ergibt sich für das zu mischende Futter neben der Zerkleinerungswirkung auch eine Förderwirkung, die in erster Linie auf die Mischschnecke und deren Antrieb zurückzuführen ist.

Der Grundkörper der Klinge für den beschriebenen Einsatzzweck ist flach und eben ausgebildet. Der Grundkörper besitzt also zwei ebene Flächen. Die Oberfläche der Mischschnecke stellt dagegen eine gewölbte, also nicht-ebene, Fläche dar. Bei der Befestigung der Klinge an der Mischschnecke liegt die Klinge daher in zwei Bereichen an, während sie im übrigen Bereich hohl gelagert wird. Da auf diesem Wege nur eine unzureichende Stabilisierung der Klinge erreichbar ist, muß die Anpreßkraft des Befestigungsmittels relativ hoch gewählt werden, wodurch die Klinge gegenüber der Oberfläche der Förderwendel verspannt wird. Eine solche Verspannung halten nur solche Klingen aus, die durchgehend vergütet sind und somit eine relativ niedrige Härte, etwa im Bereich von 50 HRC, aufweisen. Diese niedrige Härte bringt es mit sich, daß in relativ kurzer Einsatzzeit erheblicher Verschleiß an den Klingen entsteht, so daß die Einsatzdauer begrenzt ist. Bei induktiv gehärteten Klingen lassen sich zwar etwas höhere Härten, etwa im Bereich von 56 HRC, erreichen, aber auch hiermit lassen sich keine zufriedenstellenden Standzeiten hinsichtlich Verschleiß erzielen. Andererseits lassen sich aber höhere Härten nicht anwenden, weil dann die Gefahr besteht, daß die Klingen bei ihrer Befestigung an der Mischschnecke durch die Verspannung brechen und/oder im Betrieb des Futtermischwagens brechen, wenn erhebliche Kräfte auf die verspannt befestigten Klingen, auch stoßartig, einwirken.

Aus der DE-PS 19 46 003 ist eine Messerklinge für Mähbalken mit auf einem Fingerbalken hin- und herlaufendem Mähmesser bekannt, also eine Klinge für einen ganz anderen Einsatz- und Gebrauchszweck. Die Klinge besitzt einen Befestigungsrand, in welchem Durchbrechungen für den Durchtritt von Nieten oder Schrauben vorgesehen sind. Der Umriß der Klinge ist so gestaltet, daß gleichsam zwei Klingen aus einem Materialstück gebildet werden. Der Grundkörper der Doppelklinge ist flach und weitgehend eben ausgebildet. Zur Ausbildung der Schneiden und/oder zur Schaffung von Klingenauflageflächen sind Abkantungen und Einprägungen im Grundkörper bzw. am Grundkörper vorgesehen, in deren Bereich durch einen gemeinsamen Schleifvorgang sowohl die Schneiden wie auch die Klingenauflageflächen geschaffen werden. Der Schleifvorgang findet in einer Ebene statt, so daß die Klingenauflageflächen mit den geschliffenen Schneidflächen eine ebene Fläche bilden. Diese ebene Fläche ist sinnvoll, weil die beschriebenen Klingen in ihrem Einsatz mit einer ebenen Gegenfläche zusammenarbeiten.

Durch die DE 30 42 950 A1 ist eine Klinge für Gartenabfall-Zerkleinerungsgeräte bekannt, deren Grundkörper eine Einprägung aufweist, die eine Rastsicke bildet, um in ein Rastloch einzugreifen. Der Grundkörper der Klinge wird auf einer ebenen Messerträgerscheibe mit einem Randbereich des Grundkörpers der Klinge aufgelagert.

Der Erfindung liegt die Aufgabe zugrunde, eine Klinge für eine Mischschnecke an einem Futtermischwagen bereitzustellen, die in ihrem Schneidenbereich eine hohe Härte aufweisen kann und bei der trotz Befestigung an der Mischschnecke nicht die Gefahr des Bruches der Schneide besteht.

Erfindungsgemäß wird dies bei einer Klinge für eine Mischschnecke an einem Futtermischwagen mit den im Oberbegriff des Anspruches 1 angegebenen Merkmalen dadurch erreicht, daß der Grundkörper mindestens drei Einprägungen aufweist, die drei Auflager für den Grundkörper an der gewölbten Oberfläche der Mischschnecke bilden und gegenüber der Haupterstreckungsebene des Grundkörpers in etwa senkrechter Richtung so weit vorstehen, daß bei der Befestigung der Klinge im Randbereich der Mischschnecke nur die Auflager am Grundkörper in Kontakt zu der gewölbten Oberfläche der Mischschnecke kommen.

Die Erfindung geht von dem Gedanken aus, die Klinge so auszubilden, daß eine stabile Auflagerung der Klinge im Randbereich der Mischschnecke möglich ist, ohne daß eine die Bruchgefahr begünstigende Verspannung eintritt. Es werden drei Auflager geschaffen, also drei Bereiche, in denen ein unmittelbarer Kontakt zwischen dem Grundkörper der Klinge und der Oberfläche der Mischschnecke stattfindet. Durch drei solcher Auflager wird die Ebene präzise festgelegt, in der die Haupterstreckungsebene des Grundkörpers der Klinge gegenüber der gewölbten Oberfläche der Mischschnecke angeordnet ist. Die Auflager werden in ihrer einfachsten Ausführungsform durch Einprägungen realisiert, wobei diese verformten Bereiche des Grundkörpers der Klinge etwa senkrecht zu der Haupterstreckungsebene des Grundkörpers so weit abstehen, daß eine ansonsten freie Auflagerung des Grundkörpers auf der gewölbten Oberfläche der Mischschnecke stattfindet. Die überstehende Höhe wird entsprechend den Gegebenheiten gewählt. In der Regel genügen mindestens drei Einprägungen bzw. Auflager, was natürlich nicht ausschließt, daß auch mehr als drei Auflager vorgesehen sein können.

Die Erfindung läßt sich auch in einer zweiteiligen Ausführungsform realisieren, wenngleich aus Kostengründen in der Regel eine einteilige Ausführungsform bevorzugt werden dürfte. Bei zweiteiliger Ausführungsform ist dann zusätzlich zu der Klinge ein gesondertes Teil vorgesehen, das mindestens drei Auflager bildende Einprägungen für die indirekte Auflagerung der Klinge an der gewölbten Oberfläche der Mischschnecke aufweist, wobei die Einprägungen gegenüber der Haupterstreckungsebene des gesonderten Teils in etwa senkrechter Richtung so weit vorstehen, daß bei der Befestigung der Klinge im Randbereich der Mischschnecke nur die Auflager des gesonderten Teils in Kontakt zu der gewölbten Oberfläche der Mischschnecke kommen. Bei dieser Ausführungsform kann beispielsweise der gesonderte Teil, etwa ähnlich einer Unterlegscheibe, vorgesehen sein, der auf seinem Umfang die drei Einprägungen aufweist, die dann die Auflager bilden.

Der gesonderte Teil kann Einprägungen aufweisen, die in Richtung auf die Klinge vorstehende Fortsätze für die Auflagerung des Grundkörpers der Klinge bilden. Die Einprägungen können also auch beidseitig vorstehend vorgesehen sein, um einerseits drei sich auf der Oberfläche der Mischschnecke abstützende Auflager zu bilden und andererseits drei weitere Auflager abzugeben, auf denen sich wiederum der Grundkörper der Klinge in der befestigten Stellung abstützt.

Besondere Bedeutung kommt dieser Auflagerung dann zu, wenn die Klinge mindestens eine - insbesondere induktiv - gehärtete Schneide aufweist. Durch die Art der Auflagerung im Randbereich der Mischschnecke wird eine beachtliche Stabilität erreicht, ohne daß eine die Bruchgefahr begünstigende Verspannung eintritt.

Die Auflager können punktförmig, linienförmig oder flächig ausgebildet sein. Je nach dieser Gestaltung entstehen punktförmige, linienförmige oder flächig ausgebildete Kontaktbereiche zwischen der betreffenden Oberfläche der Einprägungen des Grundkörpers einerseits und der Oberfläche der Mischschnecke andererseits. Da die Schneide der Klinge über den freien Rand der Mischschnecke überstehend positioniert werden muß, befinden sich die Auflager außerhalb der Schneiden, also mehr im inneren, zentralen Bereich des Grundkörpers. Die Auflager können auch zusätzlich die Funktion erfüllen, Haft- oder Reibungskräfte bereitzustellen, die einem Verdrehen der Klinge um die Achse der Befestigungseinrichtung entgegenwirken. Andererseits ist es aber auch möglich, die Durchbrechung unrund zu gestalten und/oder mehrere Durchbrechungen am Grundkörper vorzusehen, um eine verdrehgesicherte Befestigung des Grundkörpers der Klinge an der Mischschnecke zu ermöglichen.

Die Auflager sollten symmetrisch um die Durchbrechung angeordnet sein. Dies erbringt eine gleichmäßige Belastung des Grundkörpers im mittleren Bereich, ohne daß die Schneiden einem Verspannungsvorgang unterworfen werden. So ist es beispielsweise möglich, daß die Durchbrechung im Zentrum des Grundkörpers vorgesehen ist und die Auflager etwa auf halbem Radius zu den Schneiden über den Umfang gleichmäßig verteilt angeordnet sind. Dies bedeutet, daß die Auflager auf einem Kreis um den Mittelpunkt des Grundkörpers bzw. der Durchbrechung angeordnet sind und bei Anordnung von drei Auflagern miteinander einen Winkel von 120° bilden.

Die Höhe der Auflager aus der Haupterstreckungsebene des Grundkörpers in etwa senkrechter Richtung ist entsprechend der Steigung und der Lage des Befestigungsortes der Klinge oder des gesonderten Teils im Randbereich der Mischschnecke bemessen. Die Löcher in der Mischschnecke sind so angeordnet, daß die Auflager auf der gewölbten Oberfläche der Mischschnecke zur Anlage kommen, wenn die Klinge befestigt wird. Bei relativ kleiner Steigung der Wendel der Mischschnecke und relativ großem Außendurchmesser ist die Wölbung der Oberfläche der Mischschnecke relativ gering, so daß auch die Auflager nur eine relativ geringe Höhe aufweisen müssen.

Der Grundkörper kann bei induktiv gehärteten Klingen im Bereich der Schneide bzw. der Schneiden eine Härte von mindestens etwa 56 HRC aufweisen und die Auflager sind im nicht-gehärteten Bereich des Grundkörpers angeordnet. Dadurch wird die Klinge bei ihrer Befestigung an der Mischschnecke auf den drei Auflagern frei aufgelagert und gehalten, ohne daß eine Verspannung der Schneiden eintritt. Die erfindungsgemäße Ausbildung der Klinge macht es möglich, die Schneiden bis auf etwa 60 HRC oder sogar noch darüber hinaus zu härten, so daß die Einsatzdauer der Klinge erheblich verlängert wird.

Selbst bei ganz vergüteten Klingen kann die Härte im Vergleich zum Stand der Technik deutlich erhöht werden, so z.B. von unter 50 HRC auf ca. 55 HRC, wobei die Auflager in diesem Fall im gehärteten Bereich liegen. In diesem Fall empfielt es sich, die Auflager linienförmig oder flächig auszubilden.

In einer besonders vorteilhaften Ausführungsform sind die Auflager sich radial von der Durchbrechung des Grundkörpers oder einer Durchbrechung im gesonderten Teil in Richtung auf die Schneiden erstreckend vorgesehen. Damit stützt sich die der Befestigung dienende Schraube bereits in unmittelbarer Umgebung von der Durchbrechung in der Klinge ab, und zwar ohne daß bei der Befestigung eine Verspannung des Grundkörpers eintritt. Je nach der radialen Länge der Einprägungen kann es sinnvoll sein, den Einprägungen auf der Auflagerseite eine an die gewölbte Oberfläche der Mischschnecke angepaßte Form zu verleihen, um einerseits eine hinreichend große Verdrehsicherung zu erzielen und andererseits ein Verspannen der Klinge bei der Befestigung zu vermeiden.

Die Erfindung wird anhand bevorzugter Ausführungsbeispiele weiter erläutert und beschrieben. Es zeigen:
- Fig. 1: eine Draufsicht auf eine Klinge in einer ersten Ausführungsform,
- Fig. 2: eine Seitenansicht der Klinge gemäß Fig. 1,
- Fig. 3: eine Draufsicht auf eine zweite Ausführungsform der Klinge,
- Fig. 4: einen Schnitt gemäß der Linie IV-IV in Fig. 1 oder 3,
- Fig. 5: eine ähnliche Darstellung wie Fig. 4, jedoch mit einer anderen Formgebung der Einprägung,
- Fig. 6: eine weitere Ausführungsform der Einprägung,
- Fig. 7: eine weitere Gestaltung der Einprägung und
- Fig. 8: eine Schnittdarstellung durch eine zweiteilige Klingenanordnung.

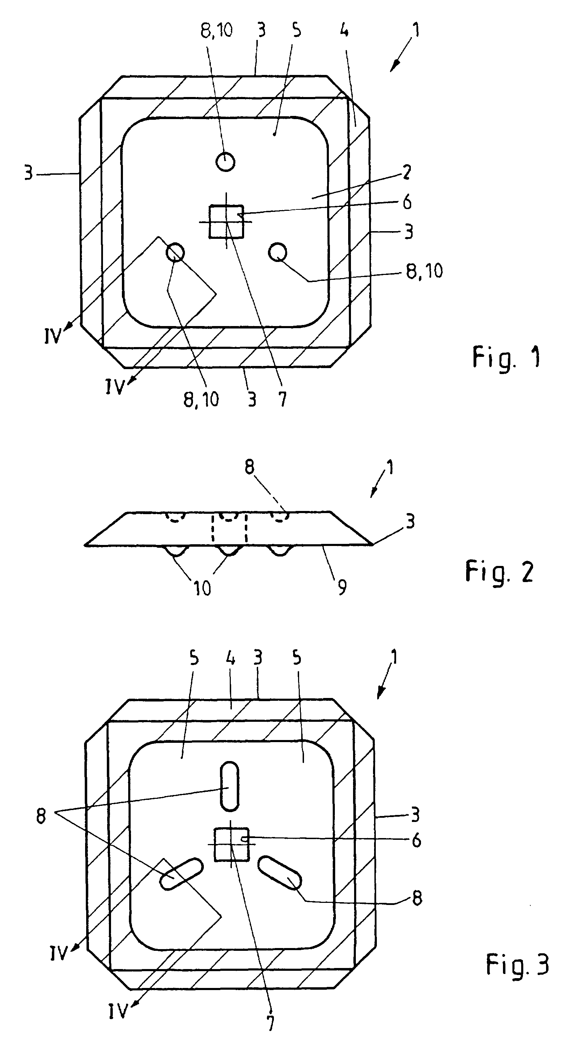

Die in Fig. 1 dargestellte Klinge 1 weist eine flachen, weitgehend eben gestalteten Grundkörper 2 aus Stahl auf, der in etwa rechteckige Gestalt besitzt. Im Randbereich sind vier Schneiden 3 gebildet, beispielsweise durch einen Schleifvorgang aus einem plattenförmig gestanzten Rohling. Der schraffierte Bereich 4 ist gehärtet, beispielsweise auf mindestens 56 HRC, vorzugsweise höher, während der von dem gehärteten Bereich 4 umschlossene mittlere Bereich 5 des Grundkörpers 2 ungehärtet ist. Der Grundkörper 2 weist in seinem Zentrum eine Durchbrechung 6 auf, die in Zuordnung zu den vier Schneiden 3 quadratische Gestalt besitzt und damit eine verdrehsichere Befestigung in Verbindung mit ebenfalls quadratisch ausgebildeten Löchern im Rand der Wendel der Mischschnecke in vier verschiedenen Stellungen ermöglicht. In symmetrischer Anordnung zu der Achse 7 der Durchbrechung 6, und zwar im nicht-gehärteten mittleren Bereich 5, weist der Grundkörper 2 drei Einprägungen 8 auf, die so geformt und ausgebildet sind, daß sie gegenüber der anderen Oberfläche 9 vorstehende Auflager 10 bilden. Da die Einprägungen 8 punktförmig ausgebildet sind, weisen auch die Auflager 10 punktförmige Gestalt auf, d. h. sie legen sich mehr oder weniger punktförmig an die hier nicht dargestellte gewölbte Oberfläche der Wendel der Mischschnecke an, wenn die Klinge 1 dort befestigt wird. Für die Befestigung kann eine Schraube mit quadratischem Schaftabschnitt für die verdrehsichere Lagerung der Klinge 1 und eine zugeordnete Mutter vorgesehen sein. Die Auflager 10 weisen gegenüber der Oberfläche 9, die parallel zur Haupterstreckungsebene der Klinge 1 angeordnet ist, eine Höhe bzw. einen solchen Überstand auf, daß die Klinge 1 in der befestigten Stellung am Rand der Mischschnecke nur auf den drei Auflagern 10 aufliegt, während die übrigen Bereiche der Oberfläche 9 jeweils einen Abstand zu der Oberfläche der Mischschnecke besitzen. Die Einprägungen 8 bzw. Auflager 10 sind auf jeden Fall in dem nicht gehärteten mittleren Bereich 5 angeordnet, und zwar über den Umfang gleichmäßig verteilt und in einer gleichmäßigen Entfernung zu der Achse 7. Die radiale Anordnung kann so getroffen sein, daß durch das Festziehen der Schraube beim Befestigen der Klinge der Grundkörper 2 möglichst wenig verspannt wird, jedoch andererseits seinen festen, verdrehgesicherten Sitz erhält.

Es ist leicht vorstellbar, daß mindestens drei Einprägungen 8 bzw. Auflager 10 gebildet sein müssen, um die Klinge 1 mit ihrer Haupterstreckungsebene auf einer gewölbten Oberfläche der Mischschnecke eindeutig festzulegen. Es ist aber durchaus möglich, die Anzahl der Einprägungen 8 und damit der Auflager 10 demgegenüber zu vergrößern, wobei dann in der Regel immer nur drei Auflager 10 wirksam werden bzw. ihre Lagerfunktion erfüllen. Die Auflager 10 enden in einer gemeinsamen Ebene.

Es ist weiterhin vorstellbar, daß die Auflager 10 punktförmig, linienförmig oder auch flächig ausgebildet sein können. Fig. 3 zeigt eine linienförmige Gestaltung bei ansonsten unveränderter Gestaltung der Klinge 1.

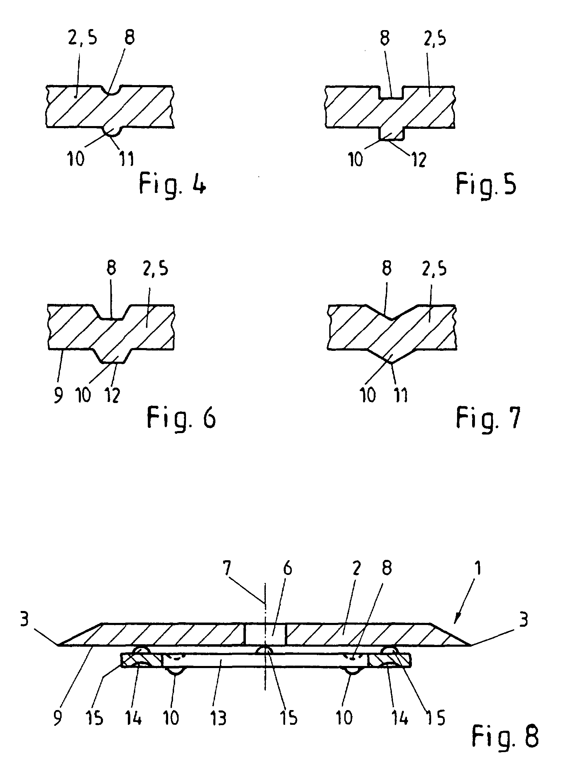

In den Fig. 4 bis 7 sind die Formgebungen der Einprägungen 8 und der dadurch bewirkten Auflager 10 in verschiedenen Ausführungsformen dargestellt. Dies gilt sowohl für punktförmige Ausführungen gemäß Fig. 1 als auch für linienförmige Gestaltung gemäß Fig. 3. Auflager 10 weisen an ihrem freien Ende Kontaktpunkte 11 bzw. Kontaktflächen 12 auf, die zusätzlich aufgerauht ausgebildet sein können, um einen Verdrehschutz zu gewährleisten. Auch die Anordnung von einzelnen Spitzen o. dgl. ist zu diesem Zweck im Bereich der Kontaktpunkte 11 und Kontaktflächen 12 möglich. Alternativ oder zusätzlich können die Kontaktpunkte 11 und die Kontaktflächen 12 z. B. durch Carbonitrieren in der Oberfläche. gehärtet sein.

In Fig. 8 ist eine zweiteilige Ausführungsform dargestellt. Die Klinge 1 möge kreisrunde Gestalt besitzen, so daß sich ihre Schneide 3 über den Umfang erstreckt. Eine Härtung liegt im Bereich der Schneiden 3 vor. Einer solchen Klinge 1 ist ein separates Teil 13 zugeordnet, welches als Ring oder Scheibe ausgebildet ist und vorzugsweise eine Durchbrechung besitzt, die ähnlich groß wie die Durchbrechung 6 gestaltet ist. Es ist aber auch möglich, wie dargestellt, daß der Teil 13 eine wesentlich größere Durchbrechung aufweist und gleichsam ringförmig ausgebildet ist. Der Teil 13 trägt auf seiner Unterseite die Auflager 10, die durch Einprägungen 8 auf seiner Oberseite gebildet sind. Umgekehrt weist der Teil 13 von seiner Unterseite her angebrachte Einprägungen 14 auf, die auf der Oberseite vorstehende Fortsätze 15 bilden, die hier beispielsweise sechsfach vorgesehen sind und in einer gemeinsamen Ebene enden, so daß die Oberfläche 9 der Klinge in montiertem Zustand an den Fortsätzen 15 abgestützt ist. Auch hier können die Auflager 10 und die Fortsätze 15 wiederum punktförmig, linienförmig oder flächig ausgebildet sein.

### BEZUGSZEICHENLISTE

- 1 -: Klinge
- 2 -: Grundkörper
- 3 -: Schneide
- 4 -: Bereich
- 5 -: mittlerer Bereich
- 6 -: Durchbrechung
- 7 -: Achse
- 8 -: Einprägung
- 9 -: Oberfläche
- 10 -: Auflager

- 11 -: Kontaktpunkte
- 12 -: Kontaktflächen
- 13 -: Teil
- 14 -: Einprägung
- 15 -: Fortsatz

## Patentansprüche

1. Klinge (1) für eine Mischschnecke an einem Futtermischwagen, mit einem flachen, weitgehend ebenen Grundkörper (2) aus Stahl, der mindestens eine der Befestigung im Randbereich der Mischschnecke dienende Druchbrechung (6) und mindestens eine Schneide (3) aufweist, **dadurch gekennzeichnet, daß** der Grundkörper (2) mindestens drei Einprägungen (8) aufweist, die drei Auflager (10) für den Grundkörper (2) an der gewölbten Oberfläche der Mischschnecke bilden und gegenüber der Haupterstreckungsebene des Grundkörpers in etwa senkrechter Richtung so weit vorstehen, daß bei der Befestigung der Klinge (1) im Randbereich der Mischschnecke nur die Auflager (10) am Grundkörper (2) in Kontakt zu der gewölbten Oberfläche der Mischschnecke kommen.

2. Klinge (1) für eine Mischschnecke an einem Futtermischwagen, mit einem flachen, weitgehend ebenen Grundkörper (2) aus Stahl, der mindestens eine der Befestigung im Randbereich der Mischschnecke dienende Druchbrechung (6) und mindestens eine Schneide (3) aufweist, **dadurch gekennzeichnet, daß** zusätzlich zu der Klinge (1) ein gesondertes Teil (13) vorgesehen ist, das mindestens drei Auflager (10) bildende Einprägungen (8) für die indirekte Auflagerung der Klinge (1) an der gewölbten Oberfläche der Mischschnecke aufweist, wobei die Einprägungen (8) gegenüber der Haupterstreckungsebene des gesonderten Teils (13) in etwa senkrechter Richtung so weit vorstehen, daß bei der Befestigung der Klinge (1) im Randbereich der Mischschnecke nur die Auflager (10) des gesonderten Teils (13) in Kontakt zu der gewölbten Oberfläche der Mischschnecke kommen.

3. Klinge nach Anspruch 2, **dadurch gekennzeichnet, daß** der gesonderte Teil (13) Einprägungen (14) aufweist, die in Richtung auf die Klinge (1) vorstehende Fortsätze (15) für die Auflagerung des Grundkörpers (2) der Klinge (1) bilden.

4. Klinge nach einem oder mehreren der Ansprüche 1 bis 3, **dadurch gekennzeichnet, daß** die Klinge (1) mindestens eine gehärtete Schneide (3) aufweist.

5. Klinge nach einem oder mehreren der Ansprüche 1 bis 4, **dadurch gekennzeichnet, daß** die Auflager (10) punktförmig, linienförmig oder flächig ausgebildet sind.

6. Klinge nach einem oder mehreren der Ansprüche 1 bis 5, **dadurch gekennzeichnet, daß** die Auflager (10) symmetrisch um die Durchbrechung (6) angeordnet sind.

7. Klinge nach Anspruch 6, **dadurch gekennzeichnet, daß** die Durchbrechung (6) im Zentrum des Grundkörpers (2) vorgesehen ist und die Auflager (10) etwa auf halbem Radius zu den Schneiden (3) über den Umfang gleichmäßig verteilt angeordnet sind.

8. Klinge nach Anspruch 1 oder 2, **dadurch gekennzeichnet, daß** die Höhe der Auflager (10) aus der Haupterstreckungsebene des Grundkörpers (2) in etwa senkrechter Richtung entsprechend der Steigung und der Lage des Befestigungsortes der Klinge (1) oder des gesonderten Teils (13) im Randbereich der Mischschnecke bemessen ist.

9. Klinge nach Anspruch 1 oder 2, **dadurch gekennzeichnet, daß** der Grundkörper (2) im Bereich der Schneide (3) oder der Schneiden (3) eine Härte von mindestens etwa 56 HRC aufweist und die Auflager (10) im nicht-gehärteten Bereich (5) des Grundkörpers (2) oder des gesonderten Teils (13) angeordnet sind.

10. Klinge nach Anspruch 1 oder 2, **dadurch gekennzeichnet, daß** die Auflager (10) sich radial von der Durchbrechung (6) des Grundkörpers (2) oder einer Durchbrechung im gesonderten Teil (13) in Richtung auf die Schneiden (3) erstreckend vorgesehen sind.

## Claims

1. Cutterblade (1) for a mixing screw in a forage mixing vehicle comprising a flat, substantially plane body (2) made from steel, the body having at least one opening (6) serving for the mounting of the cutterblade on the outer rim of the mixing screw and including at least one cutting edge (3), **wherein** the body (2) comprises at least three impressions (8) forming three bearings (10) to support the body on the curved surface of the mixing screw and extending in perpendicular direction from the main plane of the body in an extent so that after mounting the cutterblade (1) on the outer rim of the mixing screw only the bearings (10) of the body (2) contact the curved surface of the mixing screw.

2. Cutterblade (1) for a mixing screw in a forage mixing vehicle comprising a flat, substantially plane body (2) made from steel, the body having at least one opening (6) serving for the mounting of the cutterblade on the outer rim of the mixing screw and including at least one cutting edge (3), **wherein** additionally to the cutterblade (1) a separate member (13) is provided comprising at least three impressions (8) forming three bearings (10) to support indirectly the body on the curved surface of the mixing screw and extending in perpendicular direction from the main plane of the separate member (13) in an extent so that after mounting the cutterblade (1) on the outer rim of the mixing screw only the bearings (10) of the separate member (13) contact the curved surface of the mixing screw.

3. A cutterblade of claim 2, **wherein** the separate member (13) comprises embossings (14) forming extensions (15) to support the body (2) of the cutterblade (1).

4. A cutterblade of one or more of the claims 1 to 3, **wherein** the cutterblade (1) includes at least one hardened cutting edge (3).

5. A cutterblade of one or more of the claims 1 to 4, **wherein** the bearings (10) have a punctual, a line-like, or a flat design.

6. A cutterblade of one or more of the claims 1 to 5, **wherein** the bearings (10) are positioned symmetrically around the opening (6).

7. A cutterblade of claim 6, **wherein** the opening (6) is located in the center of the body (2) and the bearings (10) are positioned at about half the distance to the cutting edges (3) in an equi-circumferential distribution.

8. A cutterblade of claim 1 or 2, **wherein** the height of the bearings (10) above the main plane of the body (2) in perpendicular direction is dimensioned with respect to the gradient and the position of the mounting place of the cutterblade (1) or of the separate member (13) on the outer rim of the mixing screw.

9. A cutterblade of claim 1 or 2, **wherein** the body (2) at the cutting edge (3) or the cutting edges (3) has a hardness of at least about 56 HRC and the bearings (10) are arranged in the non-hardened area (5) of the body (2) or of the separate member (13).

10. A cutterblade of claim 1 or 2, **wherein** the bearings (10) extend radially from the opening (6) of the body (2) or an opening of the separate member (13) directed to the cutting edges (3).

## Revendications

1. Lame de coupe (1) pour une vis mélangeuse dans une remorque mélangeuse de fourrage, avec un corps de base (2) plat, largement lisse, en acier qui présente au moins une découpure (6) servant à la fixation dans la région de bord de la vis mélangeuse et au moins un tranchant(3),
**caractérisée en ce que** le corps de base (2) présente au moins trois empreintes (8) qui forment trois appuis (10) pour le corps de base (2) sur la surface courbe de la vis mélangeuse et sont en saillie par rapport au plan d'extension principal du corps de base en direction sensiblement perpendiculaire assez loin pour que, lors de la fixation de la lame de coupe (1) dans la zone de bord de la vis mélangeuse, seuls les appuis (10) sur le corps de base (2) viennent en contact avec la surface courbe de la vis mélangeuse.

2. Lame de coupe (1) pour une vis mélangeuse dans une remorque mélangeuse de fourrage, avec un corps de base (2) plat, largement lisse, en acier qui présente au moins une découpure (6) servant à la fixation dans la région de bord de la vis mélangeuse et au moins un tranchant(3),
**caractérisée en ce que**, en plus de la lame de coupe (1), est prévue une pièce (13) séparée qui présente au moins trois empreintes (8) formant des appuis (10) pour le support indirect de la lame de coupe (1) sur la surface courbe de la vis mélangeuse, les empreintes (8) faisant saillie par rapport au plan d'extension principal de la pièce (13) séparée en direction sensiblement perpendiculaire assez loin pour que, lors de la fixation de la lame de coupe (1) dans la zone de bord de la vis mélangeuse, seuls les appuis (10) sur la pièce (13) séparée viennent en contact avec la surface courbe de la vis mélangeuse.

3. Lame de coupe selon la revendication 2,
**caractérisée en ce que** la pièce (13) séparée présente des empreintes (14) qui forment des prolongements (15) en saillie en direction de la lame de coupe (1) pour le support du corps de base (2) de la lame de coupe (1)

4. Lame de coupe selon une ou plusieurs des revendications 1 à 3 ,
**caractérisée en ce que** la lame de coupe (1) présente au moins un tranchant (3) trempé.

5. Lame de coupe selon une ou plusieurs des revendications 1 à 4,
**caractérisée en ce que** les appuis (10) sont réalisés ponctuels, linéaires ou plans.

6. Lame de coupe selon une ou plusieurs des revendications 1 à 5,
**caractérisée en ce que** les appuis (10) sont disposés symétriquement autour de la découpure (6).

7. Lame de coupe selon la revendication 6,
**caractérisée en ce** la découpure (6) est ménagée au centre du corps de base (2) et les appuis (10) sont disposés répartis régulièrement sur la périphérie sensiblement à demi-rayon par rapport aux tranchants (3).

8. Lame de coupe selon la revendication 1 ou 2,
**caractérisée en ce que** la hauteur des appuis (10) hors du plan d'extension principal du corps de base (2) en direction sensiblement perpendiculaire est dimensionnée en correspondance de la pente et de la position de l'emplacement de fixation de la lame de coupe (1) ou de la pièce (13) séparée dans la zone de bord de la vis mélangeuse.

9. Lame de coupe selon la revendication 1 ou 2,
**caractérisée en ce que** le corps de base (2) présente, dans la zone du tranchant (3) ou des tranchants (3), une dureté d'au moins environ 56 HRC et les appuis (10) sont disposés dans la zone (5) non trempée du corps de base (2) ou de la pièce (13) séparée.

10. Lame de coupe selon la revendication 1 ou 2,
**caractérisée en ce que** les appuis (10) sont disposés s'étendant radialement depuis la découpure (6) du corps de base (2) ou une découpure dans la pièce (13) séparée en direction des tranchants (3).
